# FASCICULE DE BREVET EUROPEEN

(11) **EP 3 913 168 B1**
(45) Date de publication et mention de la délivrance du brevet: **19.10.2022**
(21) Numéro de dépôt: 21173345.6
(22) Date de dépôt: 11.05.2021
(51) Int. Cl.: E04H 4/10, B29C 51/36, B32B 3/28, B65D 81/03, B32B 3/12, B32B 27/08

(54) **FILM BULLES D'ISOLATION ET SON CYLINDRE D'EMBOSSAGE**
ISOLIERPOLSTERFOLIE UND IHR PRÄGEZYLINDER
BUBBLE INSULATION FILM AND EMBOSSING CYLINDER

(30) Priorité: 20.05.2020 FR 2005143
(43) Date de publication de la demande: 24.11.2021
(73) Titulaire: CID Plastiques, 34130 Valergues (FR)
(72) Inventeur: CEBRON, Marina, 34670 Baillargues (FR)
(74) Mandataire: Rhein, Alain

(56) Documents cités:
- EP-B1- 2 470 734
- WO-A1-2017/136882

## Description

[La présente invention entre dans le domaine de la plasturgie et plus spécifiquement dans le domaine des solutions de recouvrement des bassins ou des piscines. En particulier, l'invention concerne notamment un film à bulles pour piscine également connu sous l'appellation « bâche thermique ».

En effet, il est courant d'utiliser une bâche thermique pour isoler une piscine et prévenir une perte d'énergie calorifique. En effet, cette bâche est utilisée de nuit ou lorsque les conditions atmosphériques se détériorent temporairement. Dans ces situations la bâche permet de réduire les pertes d'énergie calorifique de l'eau en créant une couche isolante de l'environnement extérieur. Le film constitue également une barrière de protection contre les éléments extérieurs (poussières, feuilles mortes etc.). En outre, cette bâche thermique peut être utilisée en journée pour faire emmagasiner de l'énergie calorifique à l'eau, cependant ce n'est pas sa destination première.

En pratique la bâche thermique pour piscine la plus répandue est constituée d'un film bulles. Ce type de film est généralement constitué en matière polymérique. Ce film polymérique comporte une première face plane et une seconde face qui comporte un réseau de bulles étanches contenant de l'air. Dans la suite de ce document, la face qui porte les bulles sera appelée « face alvéolaire ». Chaque face est formée par une couche polymérique, les deux couches polymériques sont assemblées par laminage afin de former un film double couche. Les bulles sont formées avant l'étape de laminage par embossage d'une des deux couches polymériques.

Le réseau de bulles est composé de bulles qui possèdent une géométrie et des dimensions identiques pour chaque bulle, la plupart des films à bulles comportent une géométrie de bulle ronde de 12 mm de diamètre à leur base. Toutefois, d'autres géométries de bulle peuvent être utilisées comme une géométrie en diamant, en étoile, en cœur ou en losange.

En pratique, la face alvéolaire est placée au contact de la surface de l'eau d'une piscine. Ainsi, la surface alvéolaire crée via son réseau de bulles, une couche d'air isolante à la surface de l'eau, isolant l'eau de l'environnement extérieur. Bien entendu, pour être efficace la bâche thermique doit recouvrir l'intégralité de la surface d'eau de la piscine et/ou du bassin.

Cependant, à l'usage il n'est pas rare d'observer une immersion d'une ou de plusieurs portions de ce type de film bulles. Ceci est dû à une moindre portance et à un ensemble de bulles qui s'enfonce dans la surface de l'eau. Bien entendu, ce comportement tend à diminuer l'isolation de l'eau en créant par endroit des ponts thermiques par immersion d'une portion du film à bulles. Ce défaut d'immersion s'explique en premier lieu par le motif de la bulle. En effet, le caractère arrondi de la bulle ne favorise pas la création d'un point d'appui stable à la surface de l'eau, les bulles ont tendance à s'enfoncer dans l'eau. Enfin, l'ensemble des bulles constitue une surface de bulles qui peut être comparée avec la surface totale du film bulles. Or, pour ce type de film, le rapport entre la surface de bulles et la surface totale du film à bulles est en général inférieur à 0,67.

La surface de bulles est un paramètre qui influence sur les capacités thermiques du film bulles. Plus le rapport entre la surface de bulles et la surface du film est grand, plus le film bulles présentera une bonne capacité thermique. La hauteur des bulles constitue un autre paramètre qui influence les capacités thermiques de la bâche. Enfin, l'espace entre les bulles autrement dit, l'interstice, est un troisième paramètre capable d'influencer sur les capacités thermiques de la bâche, en effet, il agit sur la surface de bulles. Lorsque les bords de la bâche thermique sont ajustés aux bords de la piscine et/ou du bassin, la hauteur des bulles agit également sur le volume d'air compris dans l'interstice. Ce volume d'air participe également aux capacités thermiques du film bulles.

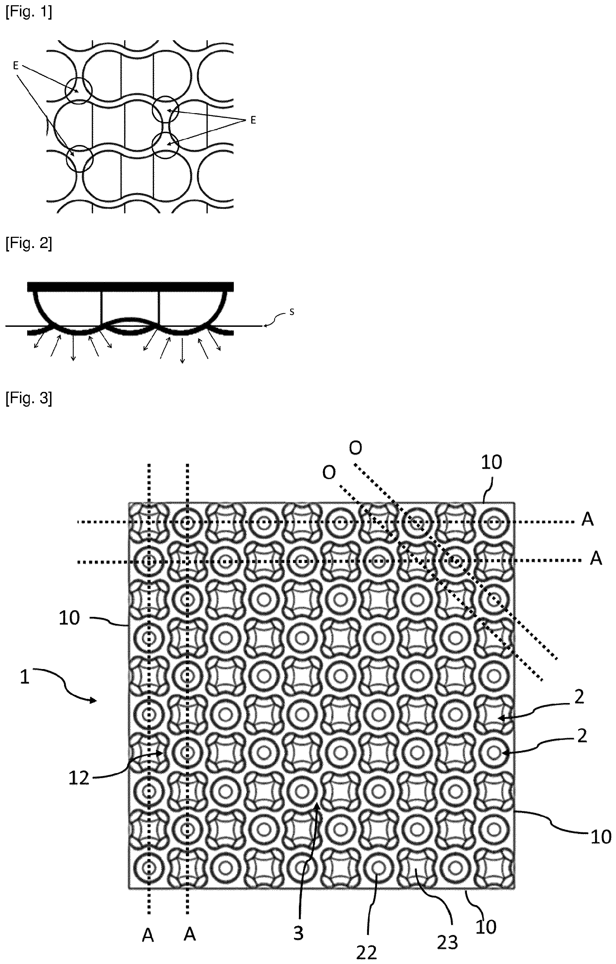

Dans ce contexte, le document EP 2 470 734 propose une amélioration de la géométrie de la bulle. Ce document décrit une bulle qui comporte deux chambres de forme ronde qui sont reliées par un étranglement. Il est à noter que l'étranglement comporte une courbure complémentaire de la forme ronde de chaque chambre. La géométrie de cette bulle s'apparente à la forme d'une cacahuète. Comme les films à bulles classiques, les bulles sont réparties selon plusieurs lignes. Chaque ligne s'étend longitudinalement ou transversalement depuis un premier bord du film à bulles jusqu'à un second bord opposé. Afin d'optimiser le rapport entre la surface de bulles et la surface totale du film à bulles, le réseau de bulles est constitué de lignes adjacentes décalées longitudinalement afin que le centre d'une chambre ronde, d'une première bulle disposée sur une première ligne, coïncide avec le centre d'un étranglement d'une seconde bulle disposée sur une seconde ligne adjacente de la première ligne. Cependant, comme cela est illustré à la figure 1, cette géométrie de bulles génère un réseau de bulles qui n'optimise pas totalement l'espace entre les bulles. En effet, le décalage de chaque ligne adjacente génère un espacement E de forme triangulaire entre deux bulles qui se suivent sur une même ligne et deux bulles disposées respectivement sur chaque ligne adjacente. De fait la répartition de l'air n'est pas homogène sur la face alvéolaire de cette bâche. De surcroît, comme cela est illustré à la figure 2, la forme sphérique de la bulle limite la portance et ne permet pas de maintenir la ligne de flottaison constante à la surface de l'eau S, ce qui favorise les échanges thermiques avec l'environnement extérieur. Les échanges thermiques sont illustrés à par des flèches doubles.

Ceci est partiellement compensé par une hauteur moyenne de bulle plus importante de 5,5 mm alors que la hauteur de bulle est de 5,2 mm pour une bâche classique (voir tableau 1 ci-après). Cependant, l'augmentation de la hauteur de bulle participe à augmenter le volume de la bâche enroulée ce qui constitue un inconvénient tant pour le stockage de la bâche que pour le transport (voir tableau 1 ci-après).

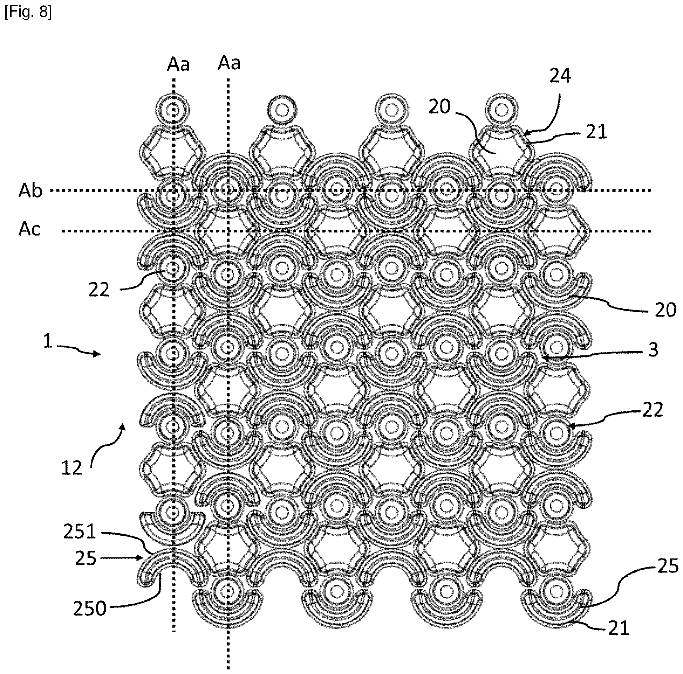

Par ailleurs, la forme de cacahuète crée une bulle pour laquelle la matière plastique est mal répartie lors de l'embossage. Les sommets des chambres présentent une épaisseur de paroi plus fine que la base de la paroi de la bulle. Cette réduction de l'épaisseur de la paroi de la bulle, combinée, avec le fait que la forme arrondie entraine un enfoncement de la bulle dans l'eau (voir figure 2), peut favoriser une dégradation prématurée de la bulle vis-à-vis des produits chimiques corrosifs. En effet, l'entretien des piscines et/ou bassins implique un usage régulier de produits chimiques corrosifs tels que le chlore, le brome, un acide, ou des sels. WO 2017/136882 A1 divulgue un film bulles délimité par des bords périphériques, le film bulles comportant une première face plane et une seconde face alvéolaire qui comprend un réseau de bulles contenant de l'air, les bulles étant séparées les unes des autres d'un interstice, le réseau de bulles est composé d'une succession de lignes (A) de bulles parallèles et adjacentes les unes des autres (cf. la figure 8, la ligne A étant une ligne horizontale au travers les bulles d'une série de bulles (302, 308)), chaque ligne (A) s'étendant, au sein du réseau de bulles d'un premier bord périphérique à un deuxième bord périphérique, le film bulles comprenant au moins deux bulles de géométries distinctes et complémentaires (302, 308), les au moins deux bulles étant disposées en alternance en fonction de leur géométrie complémentaire sur une même ligne (A) et/ou sur deux lignes (A) adjacentes du réseau de bulles.

L'analyse qui précède a mis en lumière des carences d'optimisation des capacités thermiques du film bulles, mais aussi des contraintes volumiques de stockage de transport du film bulles.

Dans ce contexte, la demanderesse à chercher à développer une solution technique afin d'améliorer les capacités thermiques d'un film bulles tout en réduisant les contraintes de stockage et de transport du film bulles enroulé.

A cet effet, la présente invention concerne un film bulles délimité par des bords périphériques, le film bulles comportant une première face plane et une seconde face alvéolaire qui comprend un réseau de bulles étanches contenant de l'air, les bulles étant séparées les unes des autres d'un interstice, le réseau de bulles est composé d'une succession de lignes de bulles parallèles et adjacentes les unes des autres, chaque ligne s'étendant, au sein du réseau de bulles, d'un premier bord périphérique à un deuxième bord périphérique.

Le film bulles, selon l'invention, se caractérise en ce qu'il comprend au moins deux types de bulles étanches contenant de l'air de géométries distinctes et complémentaires, les au moins deux types de bulles sont disposées en alternance en fonction de leur géométrie complémentaire sur une même ligne et/ou sur deux lignes adjacentes du réseau de bulles.

L'alternance de bulles de géométries distinctes et complémentaires permet d'améliorer la surface bullée du film bulles par rapport à la superficie de ce film (voir tableau 1). De fait, il est possible d'améliorer les capacités thermiques du film bulles selon l'invention, tout en améliorant sa portance.

Selon une première caractéristique de l'invention, chaque bulle comporte une même hauteur et une portion supérieure qui est plane et parallèle de la face plane du film bulles. Lorsque le film bulles est utilisé pour isoler la surface d'eau d'une piscine ou d'un bassin, la planéité de la portion supérieure de la bulle contribue à générer une lame d'air d'épaisseur constante à la surface de l'eau. De fait, les capacités d'isolation thermique du film sont optimisées. De plus, le caractère plan de la portion supérieure favorise lors de l'embossage une répartition homogène de la matière plastique. Ceci contribue à maintenir des propriétés de résistance aux produits chimiques homogènes sur l'ensemble d'une bulle et plus largement du film bulles. Par conséquent, cette caractéristique permet également l'allongement de la longévité d'un film bulles.

Par ailleurs, chaque bulle comporte au moins une paroi périphérique qui s'étend, entre la portion supérieure et la face plane, de façon convexe selon un axe perpendiculaire à la face plane. Cette configuration de chaque bulle en combinaison avec la planéité de la portion supérieure de la bulle, favorise une réduction des ponts thermiques entre la surface de l'eau et l'environnement extérieur. De plus, cette caractéristique de la paroi périphérique contribue à générer une bulle aux courbes progressives, l'épaisseur des parois de la bulle est plus régulière que l'épaisseur des parois des bulles de l'art antérieur ce qui accroît sa résistance face aux produits chimiques décrits précédemment.

Selon une deuxième caractéristique de l'invention, le film bulles comprend une première bulle circulaire de diamètre déterminé, et une deuxième bulle polygonale complémentaire possédant au moins une paroi périphérique radialement complémentaire du diamètre de la bulle circulaire. Cette complémentarité géométrique permet d'augmenter la surface bullée du film bulles selon l'invention.

Selon un premier mode de réalisation du film bulles, au moins une paroi périphérique de la bulle polygonale s'étend de façon concave par rapport à un axe qui est parallèle de la face plane du film bulles. En complément, chaque bulle circulaire est alignée avec une paroi périphérique d'au moins deux bulles polygonales, les bulles étant disposées sur une même ligne par alternance d'une bulle circulaire et d'une bulle polygonale.

Afin de maintenir une alternance de chaque type de bulles sur l'ensemble du film, la disposition des bulles sur deux lignes adjacentes est décalée afin qu'une bulle circulaire d'une première ligne soit alignée avec la paroi périphérique d'au moins une bulle polygonale disposée sur une deuxième ligne adjacente de la première ligne.

Selon l'invention il est également possible que le film bulles comprenne une troisième bulle de géométrie distincte de la bulle circulaire et de la bulle polygonale.

Ainsi, selon un deuxième mode de réalisation de l'invention, les trois bulles sont agencées de manière à former un motif géométrique qui est répété sur une même ligne. En particulier, au moins une bulle est répétée deux fois dans un même un motif géométrique, les deux mêmes bulles sont disposées symétriquement par rapport à un élément de référence afin de former un motif géométrique possédant une symétrie de structure.

Selon le deuxième mode de réalisation, les motifs géométriques sont disposés de façon décalée sur deux lignes adjacentes, un motif géométrique étant complémentaire de lui-même latéralement. Ceci est dû à la symétrique de structure du motif géométrique.

Un troisième mode de réalisation du film bulles selon l'invention se caractérise en ce qu'il comporte une quatrième bulle possédant une forme circulaire de diamètre inférieure à la première bulle circulaire. Selon ce mode de réalisation, la troisième bulle possède une section oblongue, elle définit une bulle oblongue.

Le réseau de bulles comprend alors au moins deux bulles différentes agencées de manière à former au moins un motif géométrique actinomorphique qui est répété sur une même ligne, chaque motif géométrique actinomorphique étant intercalé avec une bulle oblongue.

Selon ce mode de réalisation, un motif géométrique actinomorphiques composé d'une bulle circulaire disposée au centre du motif géométrique et de quatre bulles polygonales disposées deux à deux par symétrie radiale.

L'invention concerne aussi un film bulles pour l'isolation de piscine ou de bassin. Ce film se caractérise en ce qu'il est défini par le film bulles conforme de l'invention.

L'invention peut également concerner un film bulles pour l'isolation logistique. Ce film bulles se caractérise par les caractéristiques du film bulles conforme de l'invention.

L'invention se rapporte également à un cylindre d'embossage pour la fabrication d'un film bulles conforme de l'invention. Par conséquent, le cylindre d'embossage comprend une paroi d'embossage comportant une succession de lignes d'empreintes, les lignes étant adjacentes et parallèles les unes des autres, chaque ligne s'étend d'une première extrémité du cylindre à une deuxième extrémité du cylindre.

Le cylindre d'embossage se caractérise en ce qu'il comprend au moins deux empreintes de bulle, les au moins deux empreintes étant, d'une part, de géométries distinctes et complémentaires, et d'autre part, les au moins deux empreintes sont disposées en alternance en fonction de leur géométrie complémentaire sur une même ligne et/ou sur deux lignes adjacentes de la paroi d'embossage.

Les figures 1 et 2 illustrent l'état de la technique, et d'autres particularités et avantages apparaitront dans la description détaillée qui suit, de trois exemples de réalisation, non limitatifs, de l'invention illustrés par les figures 3 à 9 placées en annexe et dans lesquelles :
[Fig. 1] est une représentation d'une bâche à bulles de l'art antérieur définit par le document EP 2 470 734.
[Fig. 2] est une représentation de la ligne de flottaison de la bulle de la bâche de la figure 1.
[Fig. 3] est une représentation d'une bâche à bulles conforme à un premier exemple de réalisation de l'invention.
[Fig. 4] est une représentation latérale des deux différentes bulles que possède la bâche à bulles de la figure 3.
[Fig. 5] est une représentation axiale en plan avancé des deux différentes bulles de la figure 4.
[Fig. 6] est une représentation de la ligne de flottaison des deux bulles de la figure 5.
[Fig. 7] est une représentation de la diffusion de rayons UV par une des deux bulles de la figure 5.
[Fig. 8] est une représentation d'une bâche à bulles conforme à un deuxième exemple de réalisation de l'invention.
[Fig. 9] est une représentation d'une bâche à bulle conforme à un troisième exemple de réalisation de l'invention.

Comme illustré aux figures 3 à 9, l'invention concerne un film à bulles 1 pour l'isolation d'étendues d'eau telles qu'un bassin ou une piscine. En particulier, le film bulles 1 constitue une solution d'isolation thermique d'une piscine ou d'un bassin.

Comme illustré aux figures 3, 8 et 9, le film bulles 1 est délimité latéralement par des bords périphériques 10. Le film bulles 1 est fabriqué sous forme d'un lé enroulé sur lui-même. Le film bulles est utilisé pour confectionner des bâches thermiques pour recouvrir un bassin ou une piscine de forme déterminé(e). En pratique, les formes et les dimensions de la bâche thermique sont déterminées en fonction de la géométrie et des dimensions de la piscine ou du bassin que l'on souhaite isoler. Dans tous les cas, la forme de la bâche sera découpée dans un lé rectangulaire du film bulles 1.

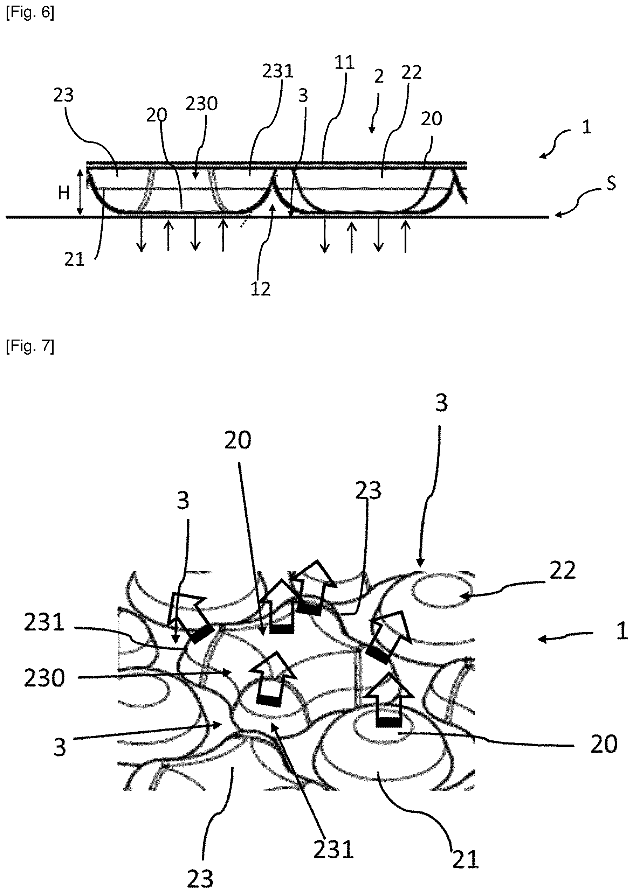

Comme cela est illustré à la figure 6, le film bulles 1 comportant une première face plane 11 et une seconde face alvéolaire 12. La face plane 11 est un film polymérique préférentiellement de type polyéthylène. Le film polymérique de la face plane 11 possède une épaisseur comprise entre 100 µm et 200 µm, de préférence, le film polymérique de la face plane 11 possède une épaisseur comprise entre 110 µm et 180 µm. Encore de préférence, le film polymérique de la face plane 11 possède une épaisseur comprise entre 140 µm et 160 µm.

En parallèle, la face alvéolaire 12 comprend un réseau de bulles 2 étanches contenant de l'air. Comme cela est illustré aux figures 3, 5, 8 et 9, les bulles 2 sont séparées les unes des autres d'un interstice 3. La face alvéolaire 12 est également constituée d'un film polymérique préférentiellement de type polyéthylène. Il est à noter que les bulles 2 sont formées par embossage avant l'assemblage de la face alvéolaire 12 à la face plane 11. L'assemblage des deux faces 11, 12 est opéré par lamination et thermocollage. Dans le cadre de ce procédé de fabrication, il est particulièrement intéressant d'utiliser le même matériau pour constituer les deux faces 11, 12 du film bulles 1. Comme cela est connu de l'homme du métier, l'air contenu dans les bulles est emprisonné lors de l'étape d'assemblage des deux faces 11, 12. De fait, le film bulles 1 selon l'invention peut être qualifié de film multicouche. Il comporte une première couche constituée de la face plane 11 et une deuxième couche constituée de la face alvéolaire.

Dans les exemples des figures 3, 8 et 9, le réseau de bulles est composé d'une succession de lignes A de bulles 2. Ici, les lignes A sont parallèles et adjacentes les unes des autres. Chaque ligne A s'étend, au sein du réseau de bulles 2, d'un premier bord 10 périphérique à un deuxième bord périphérique 10. Dans cet exemple, une ligne A s'étend entre deux bords périphériques opposés l'un de l'autre. Dans cet exemple, la disposition des bulles 2 au sein du réseau de bulles 2 permet de définir un quadrillage de lignes A.

Selon l'invention, le film bulles 1 comprend au moins deux types de bulles 2 de géométries distinctes et complémentaires. Les au moins deux types bulles 2 sont disposées en alternance en fonction de leur géométrie complémentaire sur une même ligne A et/ou sur deux lignes adjacentes A du réseau de bulles 2. De fait, le caractère complémentaire de la géométrie des deux types de bulles 2 contribue à augmenter le nombre de bulles 2 par rapport à la superficie du film bulles 1. Ceci permet d'augmenter la surface de bulles 2 ou la surface bullée du film bulles 1 par rapport à un film bulles classique. Cela est illustré dans le tableau 1 ci-après. Le tableau 1 expose une étude comparative des caractéristiques des films à bulles de l'art antérieur avec le film bulles 1 de l'invention.

Ce tableau montre que le film bulles 1 selon l'invention affiche un gain de 5% de la surface bullée par rapport à un film bulles classique de l'art antérieur.

Comme illustré à la figure 6, bien que le film bulles 1 comporte au moins deux types de bulles 2 de géométries distinctes, chaque bulle 2 comporte une même hauteur et une portion supérieure 20 qui est plane. Ainsi, cette portion supérieure 20 des deux types de bulles s'étend dans un même plan parallèle à la face plane 11 du film bulles 1. Le caractère plan de la portion supérieure 20 procure deux avantages, d'une part, il permet de former une lame d'air d'épaisseur constante à la surface de l'eau S du bassin ou de la piscine. D'autre part, le caractère plan de la portion supérieure 20 permet de limiter les échanges thermiques (illustré par des flèches à la figure 6) entre chaque bulles 2 et l'eau du bassin et/ou de la piscine. Ceci constitue un avantage important par rapport à l'état de la technique illustré à la figure 2.

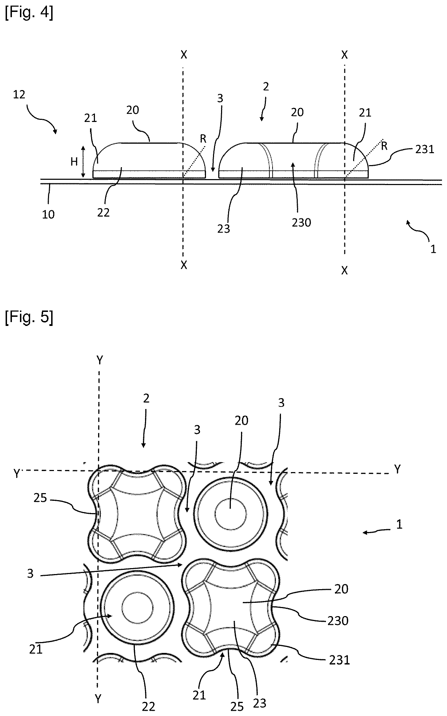

Le caractère plan de la portion supérieure 20, contribue à maintenir une hauteur H de bulles 2 inférieure à 5,2 mm. Préférentiellement, la hauteur H de bulles est inférieure ou égale à 5 mm (voir tableau 1 ci-dessous). La hauteur H d'une bulle 2 est définie par la distance entre le sommet de la bulle 2 et la face plane 11 (illustré à la figure 4). Dans le cas de l'invention, le sommet correspond à la portion supérieure 20 plane. Il est à noter qu'à la figure 6, la hauteur H correspond à l'épaisseur de la lame d'air.

**Tableau 1**

| | **Film à bulles** EP 2 470 734 | **Film à bulles classique Ø12** | **Film à bulles selon l'invention** |
|---|---|---|---|
| Superficie bullée | 78% | 67% | 72% |
| Hauteur de bulle | 5,5 mm | 5,2 mm | 5,0 mm |
| Espacement bulle | 2,0 mm | 2,0 mm | [2,5 ; 3,0] mm |
| Volume d'air d'une bulle | 0,1637 cl | 0,0477 cl | 0,2262 cl |
| Volume d'air sur bâche 32m² | 13728 cl | 8832cl | 12160 cl |
| Ø Rouleau pour 100m linéaire | 84,5 cm | 80 cm | 80 cm |
| Stockage camion 120m³ sur 2,50m*15,40m (avec 3 cm de marge) | 54 | 57 | 57 |

Comme cela est visible dans le tableau 1, limiter la hauteur de bulles participe à la réduction du diamètre d'un rouleau de film bulles 1 pour des mêmes dimensions linéaires. Par rapport au film bulles décrit dans le document EP 2 470 734, le film bulles 1 selon l'invention affiche une réduction de l'encombrement de 4,5 cm pour un rouleau de film de 100 mètres linéaire. Cette réduction de l'encombrement n'est pas négligeable puisqu'elle permet de transporter trois rouleaux supplémentaires de cent mètres linéaires dans un véhicule qui possède une capacité de transport de 120 m³.

Comme illustré aux figures 4 à 7, chaque bulle 2 possède au moins une paroi périphérique 21. La au moins une paroi périphérique qui s'étend entre la portion supérieure 20 et la face plane 11 du film bulles 1. En particulier, cette paroi périphérique 21 s'étend de façon convexe selon un axe perpendiculaire X-X à la face plane 11. Cette caractéristique permet de diminuer la hauteur H de la bulles 2 mais aussi de réduire les échanges thermiques avec la surface de l'eau (voir figures 4 et 6).

La figure 4 illustre plus particulièrement la convexité des parois périphériques 21 de chaque bulle 2. Ici, la au moins une paroi périphérique 21 d'une bulle 2 s'étend depuis la face plane 11 jusqu'à la portion supérieure 20 en formant une courbure. La courbure de chaque paroi périphérique 21 comporte un rayon R compris entre 2 mm et 6 mm, de préférence, le rayon R de la courbure est compris entre 3 mm et 5 mm et de préférence, le rayon R de la courbature est de 4 mm.

Comme illustré aux figures 3 à 9, le réseau des deux types de bulles 2 comprend au moins une première bulle circulaire 22 de diamètre déterminé. Le diamètre de la première bulle circulaire 22 est mesuré au niveau de son embase de section circulaire qui est disposé sur la face plane 11 du film bulles 1. Dans cet exemple, le diamètre de la première bulle circulaire 22 est compris entre 12 mm et 20 mm, de préférence, le diamètre de la première bulle circulaire 22 est compris entre 15 mm et 17 mm. Dans cet exemple, le diamètre de la première bulle circulaire 22 est de 16 mm.

Le réseau des deux types de bulles 2 du film bulles 1 selon l'invention comporte au moins une deuxième bulle. Cette deuxième bulle est une bulle polygonale 23. En effet, la bulle polygone 23 comporte une section polygonale au niveau de son embase qui est solidaire de la face plane 11 de l'invention. Conformément à l'invention, cette deuxième bulle polygonale 23 est complémentaire de la bulle circulaire 22. En effet, la bulle polygonale 23 possède au moins une paroi périphérique 21 radialement complémentaire du diamètre de la bulle circulaire 22. Comme cela est illustré à la figure 5, au moins une paroi périphérique 25 de la bulle polygonale 23 s'étend de façon concave par rapport à un axe Y-Y qui est parallèle du plan défini par la face plane 11 du film bulles 1. De fait, l'axe Y-Y est perpendiculaire de l'axe X-X selon lequel chaque paroi périphérique 21 présente une convexité.

Un premier exemple de réalisation de l'invention est illustré aux figures 3 à 7. Il est à noter que l'étude comparative du tableau 1 a été menée sur un film bulles 1 conforme du premier exemple de réalisation de l'invention.

Selon cet exemple, la bulle polygonale 23 possède quatre parois périphériques 21 radialement complémentaires de la bulle circulaire. Plus précisément, la bulle polygonale 23 possède une embase de section carré comprenant quatre côtés concaves 230 par rapport à un axe Y-Y et quatre angles arrondis 231. Lorsque le film bulles 1 est utilisé comme une bâche thermique, il permet d'accélérer la montée en température de l'eau, les angles arrondis 231 assurent une diffusion des rayons UV multidirectionnelle. Cette diffusion multidirectionnelle se combine avec une diffusion unidirectionnelle des rayons UV via la portion supérieure 20 plane (illustré par des flèches à la figure 7). Il est à noter que la bulle circulaire 22 participe également à la diffusion du rayonnement UV.

Selon l'exemple des figures 3 à 7, le réseau de bulles 2, 22, 23 comprend sur une même ligne A, une alternance d'une bulle circulaire 22 avec une bulle polygonale 23. De même, la bulle circulaire 22 et la bulle polygonale 23 sont alternées sur au moins deux lignes A adjacentes l'une de l'autre. A ces fins, la disposition des bulles 2, 22, 23 sur deux lignes A adjacentes est décalée afin qu'une bulle circulaire 22 d'une première ligne soit alignée avec une paroi périphérique 21 d'au moins une bulle polygonale 23 disposée sur une deuxième ligne A adjacente de la première ligne A.

De fait, au sein du réseau de bulles 2, 22, 23, chaque ligne A qui s'étend entre deux bords périphériques opposés comprend une alternance de bulles circulaires 22 et de bulles polygonales 23. Cette alternance selon deux directions perpendiculaires l'une à l'autre favorise la disposition d'un plus grand nombre de bulles 2, 22, 23 sur une même surface. Par ailleurs, la complémentarité géométrique entre chaque bulle 22, 23 contribue à réduire la surface non bullée du film bulles 1. Les deux directions perpendiculaires sont matérialisées par les lignes A qui définissent un quadrillage (voir figure 3).

Toujours à la figure 3, il est également possible de définir des lignes obliques O. Par définition, une ligne oblique O s'étend entre deux angles du film bulles 1 ou entre deux bords périphériques 10 adjacents. Selon ces lignes obliques O, une bulle 2, 22, 23 de même type est alignée et répétée. Chaque ligne oblique O comporte un alignement de bulle circulaire 22 ou un alignement de bulle polygonale 23. Ainsi, le réseau de bulles 2, 22, 23 est construit afin qu'une bulle circulaire 22 soit entourée de quatre bulles polygonales 23. De la même façon, une bulle polygonale 23 est entourée de quatre bulles circulaire 22. Bien entendu les bulles 2, 22, 23 qui sont disposées sur une ligne A située en bordure du film bulles 1 ne peuvent pas répondre à cette règle.

Sur chaque ligne A, une bulle circulaire 22 est alignée avec une paroi périphérique 21 d'au moins une bulle polygonale 23. Au cœur du réseau de bulles 2, 22, 23, une bulle circulaire est alignée avec une paroi périphérique 21 de quatre bulles polygones 23. Le cœur du réseau de bulles 2, 22, 23 correspond à l'ensemble des lignes A à l'exception des lignes A disposées en bordure du film bulles 1.

Dans l'exemple des figures 3 à 7, l'alternance de la bulle circulaire 22 et de la bulle polygonale 23 génère un motif géométrique « OX» qui se répète sur chaque ligne A. Le O du motif géométrique correspond à la bulle circulaire 22 et le X du motif correspond à la bulle polygonale 23.

Selon l'invention, l'interstice 3 varie entre 2 mm et 3,5 mm de distance entre deux bulles 2, 22, 23. Dans l'exemple de la figure 5, l'interstice 3 varie entre 2,5 mm et 3 mm. En effet, selon le premier exemple de réalisation de l'invention, le réseau de bulles 2, 22, 23 comporte deux types d'interstices 3. Un premier type d'interstice 3 est disposé entre deux angles arrondis 231 deux bulles polygonales 23 situées respectivement sur deux lignes A adjacentes et/ou sur une même ligne oblique O. Ce premier type d'interstice mesure 2,5 mm.

Le deuxième type d'interstice 3 est disposé entre la paroi périphérique 21 d'une bulle circulaire 22 et une paroi périphérique 21 d'une bulle polygonale 23. Cet interstice est courbe et possède une distance constante entre la paroi de chaque bulle 2, 22, 23. Selon cet exemple, cette distance mesure 3 mm.

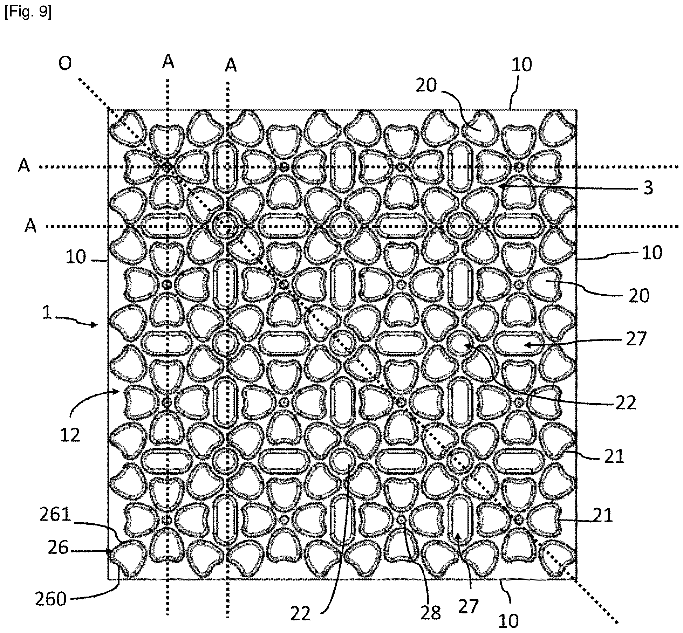

Comme illustré aux figures 8 et 9, le film bulles 1 peut comprendre une troisième bulle de géométrie distincte de la bulle circulaire 22 et de la bulle polygonale 23.

La figure 8 illustre plus particulièrement un deuxième exemple de réalisation du film bulles 1 selon l'invention. Dans cet exemple, le film bulles 1 comprend trois bulles 2 de géométrie distincte les unes des autres. Le film bulles 1 conserve une bulle circulaire 22 similaire à celle du premier exemple de réalisation de l'invention.

En outre, le film bulles 1 comporte également une bulle polygonale. Néanmoins, contrairement au premier exemple, ici la bulle polygonale est une bulle hexagonale 25. Les parois périphériques 21 de la bulle hexagonale 25 possèdent les mêmes caractéristiques que celles de la bulle polygonale 23 du premier exemple de l'invention. Pour mémoire, chaque paroi périphérique 21 est, d'une part, convexe selon un axe X-X perpendiculaire de la face plane 11 du film bulles 1, et d'autre part, concave selon un axe Y-Y parallèle du plan défini par la face plane 11. De fait, les parois périphériques 21 de la bulle hexagonale 25 sont complémentaires radialement du diamètre de la bulle circulaire 22.

Enfin, le film bulles 1 du deuxième exemple de réalisation de l'invention comprend une troisième bulle. La troisième bulle possède une embase dont la section comporte une géométrie en arc plein qui s'étend radialement sur 180°. Cette bulle arquée 25 comporte une paroi concave 250 selon un axe Y-Y parallèle de la face plane 11 du film bulles 1. De fait cette paroi est complémentaire radialement de la bulle circulaire 22. En sus, la troisième bulle comprend une paroi convexe 251 selon ledit axe Y-Y. Il est à noter que la paroi convexe 251 est complémentaire radialement des parois périphériques de la bulle hexagonale 24. Comme pour les autres bulles 2, 22, 23, 24, les parois 250, 251 sont convexes selon un axe X-X perpendiculaire de la face plane 11.

Les trois bulles 22, 24, 25 sont agencées de manière à former un motif géométrique qui est répété sur une même ligne A du réseau de bulles 2. Dans cet exemple, au moins une bulle 22, 25 est répétée deux fois dans un même un motif géométrique. Les deux mêmes bulles répétées 22, 25 sont disposées symétriquement par rapport à un élément de référence afin de former un motif possédant une symétrie structurelle. Dans cet exemple, l'élément de symétrie est constitué par la bulle hexagonale 24 et plus précisément par un axe entre passant entre deux sommets de la bulle hexagonale 24.

Dans l'exemple illustré à la figure 8, la bulle hexagonale 24 est disposée entre deux bulles circulaires 22 et chaque bulle circulaire 22 et partiellement entourée par une bulle arquée 25. Les deux bulles arquées 25 d'un même motif sont symétriques par rapport à l'élément de symétrie décrit. Ce motif géométrique peut être appelé « ossature ».

A l'inverse du premier exemple de l'invention, ce film bulles 1 comporte trois types de ligne A. Un premier type de ligne Aa s'étend selon une première direction au sein du réseau de bulles 2, 22, 24, 25. Le premier type de ligne Aa comporte les trois bulles 22, 24, 25 disposées de manière à répéter le motif géométrique ossature. Les motifs géométriques ossatures sont disposés de façon décalée sur deux lignes Aa adjacentes, un motif géométrique ossature étant complémentaire de lui-même latéralement lorsqu'il est décalé.

En complément, il existe deux autres types de lignes Ab, Ac qui sont parallèles et alternées dans le réseau de bulles 2, 22, 24, 25. Les lignes Ab, Ac sont perpendiculaires des lignes Aa. Sur les lignes Ab, Ac le motif géométrique ossature n'est pas répété. La ligne Ab comporte une succession de bulles circulaires 22 chacune associée à une bulle arquée 25. Selon la ligne Ab, la disposition et l'orientation de la bulle arquée 25 sont inversées par alternance. Quant à la ligne Ac, elle présente une succession de bulle hexagonale 24 qui sont espacées par deux bulles arquées 25 disposées dos à dos, c'est-à-dire, paroi convexe 251 contre paroi convexe 251.

Un troisième exemple de réalisation de l'invention est illustré à la figure 9. Selon cet exemple, le film bulles 1 comporte quatre bulles de géométrie distincte les unes des autres. La première bulle circulaire 22 constitue une première bulle, elle possède les mêmes caractéristiques que les bulles circulaires 22 des autres exemples de réalisation.

Une deuxième bulle est polygonale de type triangle. Cette bulle dite bulle triangle 26, possède une paroi périphérique concave 260 selon un axe Y-Y parallèle à la face plane 11 du film bulles 1. Les autres parois périphériques 261 sont convexes selon ledit axe Y-Y.

Une troisième bulle de cet exemple est constituée par une bulle de section oblongue 27. Enfin la quatrième bulle 28, est une bulle de section circulaire dont le diamètre est inférieur à la première bulle circulaire 22. En particulier, la quatrième bulle 28 possède un diamètre 5 mm pour une hauteur de 5 mm et une portion supérieure 20 plane de 1 mm de diamètre.

Parmi ces quatre bulles 22, 26, 27, 28, au moins deux bulles différentes sont agencées de manière à former au moins un motif géométrique qui est répété sur une même ligne A, chaque motif étant intercalé avec une bulle oblongue 27.

Le film bulles 1 du troisième exemple de réalisation de l'invention, possède deux motifs actinomorphiques. L'actinomorphie est la caractéristique d'une fleur qui présente une symétrie radiale. On dit alors que la fleur est actinomorphe ou polysymétrique. Chaque motif actinomorphique est composé d'une bulle circulaire 22, 28 disposée au centre du motif géométrique et de quatre bulles polygonales disposées deux à deux par symétrie radiale. Ici, la bulle polygonale correspond à la bulle triangle 26.

Dans cet exemple, un premier motif actinomorphique comporte la première bulle circulaire 22 entourée de quatre bulles triangles 26 dont la paroi concave 260 fait face à la bulle circulaire. Le second motif actinomorphique comporte, quant à lui, la quatrième bulle 28 circulaire. Au sein de ce motif, les quatre bulles triangles 26 possède une orientation inverse par rapport au premier motif actinomorphique.

Selon cet exemple, chaque ligne A est composée d'une répétition d'un même motif actinomorphique. Par ailleurs, deux lignes A adjacentes comportent des motifs actinomorphiques distincts (illustrés à la figure 9). Sur une même ligne A, les motifs actinomorphiques sont alternés avec une bulle oblongue 27. La disposition de bulle oblongue 27 au sein du réseau de bulles se fait selon deux axes. Dans un premier cas, la bulle oblongue 27 s'étend de manière coaxiale avec une ligne A, et dans un second cas, la bulle oblongue 27 s'étend selon un axe perpendiculaire à la ligne A.

Autre particularité de ce mode de réalisation, les deux motifs actinomorphiques sont alternés l'un avec l'autre sur une ligne oblique O du réseau de bulles.

Toutes les bulles 22, 23, 24, 25, 26, 27, 28 comportent une portion supérieure 20 plane et des parois périphériques convexes selon l'axe X-X qui est perpendiculaire à la face plane 11.

L'invention concerne également un cylindre d'embossage. En effet, il est nécessaire d'utiliser un cylindre d'embossage spécifique du film bulles 1 selon l'invention. En pratique, chaque exemple de réalisation de l'invention nécessite un cylindre d'embossage spécifique des bulles 2, 22, 23, 24, 25, 26, 27, 28 que le film bulles 1 comprend.

Pour mémoire, lors du procédé de fabrication, le cylindre d'embossage permet de former la face alvéolaire 12 du film bulles 1.

En particulier, le cylindre d'embossage comprend une paroi d'embossage qui comporte une succession de lignes d'empreintes. De façon similaire aux lignes A du film bulles 1, les lignes d'empreintes sont adjacentes et parallèles les unes des autres. Chaque ligne s'étend d'une première extrémité du cylindre à une deuxième extrémité du cylindre.

Selon l'invention, le cylindre d'embossage comprend au moins deux empreintes de bulle. De manière remarquable, chaque empreinte correspondant à une bulle 2, 22, 22, 23, 24, 25, 26, 27, 28 du film bulles 1. De fait, au moins deux empreintes sont de géométrie distincte et complémentaire. Une empreinte du cylindre permet d'embosser une bulle 2, 22, 22, 23, 24, 25, 26, 27, 28 spécifique du film bulles 1. Par conséquent, chaque empreinte comprend des caractéristiques adaptées à embosser une bulle 2, 22, 22, 23, 24, 25, 26, 27, 28 spécifique.

Conformément à l'invention, les au moins deux empreintes sont disposées en alternance en fonction de leur géométrie complémentaire sur une même ligne et/ou sur deux lignes adjacentes de la paroi d'embossage.

Il à noter que les empreintes sont configurées et disposées de façon à créer par embossage un réseau de bulles 2, 22, 22, 23, 24, 25, 26, 27, 28 conforme d'un des trois exemples de réalisation de l'invention.

Les trois exemples de réalisation de film bulles 1 selon l'invention peuvent être employés indifféremment. Néanmoins, on préfèrera utiliser le premier mode de réalisation qui est moins complexe et par conséquent moins couteux s'agissant du cylindre d'embossage que les deux autres modes de réalisation.

Il est à noter que le film bulles 1 selon l'invention, peut également être utilisé dans le cadre de complexes d'isolation minces réfléchissant, tels qu'un film multicouche utilisé pour l'isolation logistique. Pour ce type d'application, chaque face du film bulles 1 peut être recouverte d'un film ou revêtement métallisé. Ce recouvrement est facilité par la portion plane 20 que comporte chaque bulle 2, 22, 22, 23, 24, 25, 26, 27, 28. Lors de l'association du revêtement métallisé avec la face alvéolaire 12, de l'air est emprisonné entre les interstices 3 et le revêtement métallisé, constituant une couche isolante.

Dans le cadre cette application, le film bulles 1 selon l'invention conserve des propriétés d'isolation calorifique au travers notamment de sa surface de bulles.

## Revendications

1. Film bulles (1) délimité par des bords périphériques (10), le film bulles (1) comportant une première face plane (11) et une seconde face alvéolaire (12) qui comprend un réseau de bulles (2) étanches contenant de l'air emprisonné et comprenant au moins deux types de bulles (2, 22, 23, 24, 25, 26, 27, 28) de géométries distinctes, les bulles (2) étant séparées les unes des autres d'un interstice (3), le réseau de bulles (2) étant composé d'une succession de lignes (A) de bulles (2) parallèles et adjacentes les unes des autres, chaque ligne (A) s'étendant, au sein du réseau de bulles (2) d'un premier bord périphérique (10) à un deuxième bord périphérique (10), les géométries des deux types de bulles (2, 22, 23, 24, 25, 26, 27, 28) étant complémentaires, les au moins deux types de bulles (2, 22, 23, 24, 25, 26, 27, 28) étant disposées en alternance en fonction de leur géométrie complémentaire sur une même ligne (A) et/ou sur deux lignes (A) adjacentes du réseau de bulles (2) et chaque bulle (2) comportant une portion supérieure (20) qui est plane et s'étendant dans un même plan parallèle à la face plane (11) du film bulles (1).

2. Film bulles (1) selon la revendication 1, chaque bulle (2, 22, 23, 24, 25, 26, 27, 28) comportant au moins une paroi périphérique (21) qui s'étend, entre la portion supérieure (20) et la face plane (11), de façon convexe selon un axe (X-X) perpendiculaire à la face plane (11).

3. Film bulles (1) selon l'une des revendications 1 et 2, **caractérisée en ce qu'**il comprend une première bulle circulaire (22) de diamètre déterminé, et une deuxième bulle polygonale (23) complémentaire possédant au moins une paroi périphérique (21) radialement complémentaires du diamètre de la bulle circulaire (22).

4. Film bulles (1) selon la revendication 3, au moins une paroi périphérique (21) de la bulle polygonale (23) s'étend de façon concave par rapport à un axe (Y-Y) qui est parallèle de la face plane (11) du film bulles (1).

5. Film bulles (1) selon les revendications 3 et 4, chaque bulle circulaire (22) étant alignée avec une paroi périphérique (21) d'au moins deux bulles polygonales (23), ces bulles (22, 23) étant disposées sur une même ligne (A) par alternance d'une bulle circulaire (22) et d'une bulle polygonale (23).

6. Film bulles (1) selon la revendication 5, la disposition des bulles (22, 23) sur deux lignes (A) adjacentes est décalée afin qu'une bulle circulaire (22) d'une première ligne (A) soit alignée avec la paroi périphérique (21) d'au moins une bulle polygonale (23) disposée sur une deuxième ligne (A) adjacente de la première ligne (A).

7. Film bulles (1) selon la revendication 4, **caractérisée en ce qu'**il comprend une troisième bulle (24, 25, 26, 27) de géométrie distincte de la bulle circulaire (22) et de la bulle polygonale (23).

8. Film bulles (1) selon la revendication 7, les trois bulles (22, 24, 25, 26, 27) sont agencées de manière à former un motif géométrique qui est répété sur une même ligne (A).

9. Film bulles (1) selon l'une des revendications 7 et 8, au moins une bulle (22, 26) étant répétée deux fois dans un même un motif géométrique, les deux mêmes bulles (22, 26) sont disposées symétriquement par rapport à un élément de référence afin de former un motif géométrique possédant une symétrie de structure.

10. Film bulles (1) selon la revendication 9, les motifs géométriques sont disposés de façon décalée sur deux lignes (Aa) adjacentes, un motif géométrique étant complémentaire de lui-même latéralement.

11. Film bulles (1) selon la revendication 7, **caractérisée en ce qu'**elle comporte une quatrième bulle (28) qui possède une forme circulaire de diamètre inférieure à la première bulle circulaire (22), la troisième bulle possédant une section oblongue, elle définit une bulle oblongue (27).

12. Film bulles (1) selon la revendication 11, au moins deux bulles (22, 28, 23, 26) différentes sont agencées de manière à former au moins un motif géométrique actinomorphique qui est répété sur une même ligne (A), chaque motif géométrique actinomorphique étant intercalé avec une bulle oblongue (27).

13. Film bulles (1) selon la revendication 12, un motif géométrique actinomorphique composé d'une bulle circulaire (22, 28) disposée au centre du motif géométrique et de quatre bulles polygonales (23, 26) disposées deux à deux par symétrie radiale.

14. Utilisation d'un film bulles (1) défini selon l'une des revendications 1 à 13 pour l'isolation de piscine ou de bassin.

15. Utilisation d'un film bulles (1), défini selon l'une des revendications 1 à 13, pour l'isolation logistique.

16. Cylindre d'embossage pour la fabrication d'un film bulles (1) selon l'une des revendications 1 à 13, le cylindre d'embossage comprend une paroi d'embossage comportant une succession de lignes d'empreintes, les lignes étant adjacentes et parallèles les unes des autres, chaque ligne s'étend d'une première extrémité du cylindre à une deuxième extrémité du cylindre, **caractérisé en ce qu'**il comprend au moins deux empreintes de bulle (2, 22, 23, 24, 25, 26, 27, 28), chaque empreinte comprenant des caractéristiques adaptées à embosser une bulle (2, 22, 22, 23, 24, 25, 26, 27, 28) spécifique, les au moins deux empreintes étant, d'une part, de géométries distinctes et complémentaires, et d'autre part, les au moins deux empreintes sont disposées en alternance en fonction de leur géométrie complémentaire sur une même ligne et/ou sur deux lignes adjacentes de la paroi d'embossage.

## Patentansprüche

1. Luftblasenfolie (1), die durch Umfangsränder (10) begrenzt ist, wobei die Luftblasenfolie (1) eine erste ebene Seite (11) und eine zweite wabenförmige Seite (12) aufweist, die ein Netzwerk von undurchlässigen Luftblasen (2) umfasst, die eingeschlossene Luft enthalten und mindestens zwei Arten von Luftblasen (2, 22, 23, 24, 25, 26, 27, 28) mit verschiedenen Geometrien umfassen, wobei die Luftblasen (2) durch einen Zwischenraum (3) voneinander getrennt sind, wobei das Netzwerk von Luftblasen (2) aus einer Folge von parallelen und aneinander angrenzenden Linien (A) von Luftblasen (2) besteht, wobei sich jede Linie (A) innerhalb des Netzwerks von Luftblasen (2) von einem ersten Umfangsrand (10) zu einem zweiten Umfangsrand (10) erstreckt, wobei die Geometrien der zwei Arten von Luftblasen (2, 22, 23, 24, 25, 26, 21, 28) komplementär sind, wobei die mindestens zwei Arten von Luftblasen (2, 22, 23, 24, 25, 26, 27, 28) in Abhängigkeit von ihrer komplementären Geometrie auf einer gleichen Linie (A) und/oder auf zwei Linien (A) angrenzend an das Netzwerk von Luftblasen (2) abwechselnd angeordnet sind und jede Luftblase (2) einen oberen Abschnitt (20) aufweist, der eben ist und sich in einer gleichen Ebene parallel zu der flachen Seite (11) der Luftblasenfolie (1) erstreckt.

2. Luftblasenfolie (1) nach Anspruch 1, wobei jede Luftblase (2, 22, 23, 24, 25, 26, 27, 28) mindestens eine Umfangswand (21) aufweist, die sich zwischen dem oberen Abschnitt (20) und der ebenen Seite (11) auf konvexe Weise entlang einer Achse (X-X) senkrecht zu der ebenen Seite (11) erstreckt.

3. Luftblasenfolie (1) nach einem der Ansprüche 1 und 2, **dadurch gekennzeichnet, dass** sie eine erste kreisförmige Luftblase (22) mit bestimmtem Durchmesser und eine zweite komplementäre polygonale Luftblase (23) umfasst, die mindestens eine Umfangswand (21) radial komplementär zu dem Durchmesser der kreisförmigen Luftblase (22) besitzt.

4. Luftblasenfolie (1) nach Anspruch 3, wobei sich mindestens eine Umfangswand (21) der polygonalen Luftblase (23) auf konkave Weise in Bezug auf eine Achse (Y-Y) erstreckt, die parallel zu der ebenen Seite (11) der Luftblasenfolie (1) ist.

5. Luftblasenfolie (1) nach den Ansprüchen 3 und 4, wobei jede kreisförmige Luftblase (22) an einer Umfangswand (21) von mindestens zwei polygonalen Luftblasen (23) ausgerichtet ist, wobei diese Luftblasen (22, 23) auf einer gleichen Linie (A) durch Abwechseln einer kreisförmigen Luftblase (22) und einer polygonalen Luftblase (23) angeordnet sind.

6. Luftblasenfolie (1) nach Anspruch 5, wobei die Anordnung der Luftblasen (22, 23) auf zwei angrenzenden Linien (A) versetzt ist, damit eine kreisförmige Luftblase (22) einer ersten Linie (A) an dem Wandumfang (21) mindestens einer polygonalen Luftblase (23) ausgerichtet ist, die auf einer zweiten Linie (A) angrenzend an die erste Linie (A) angeordnet ist.

7. Luftblasenfolie (1) nach Anspruch 4, **dadurch gekennzeichnet, dass** sie eine dritte Luftblase (24, 25, 26, 27) umfasst, deren Geometrie von der kreisförmigen Luftblase (22) und der polygonalen Luftblase (23) verschieden ist.

8. Luftblasenfolie (1) nach Anspruch 7, wobei die drei Luftblasen (22, 24, 25, 26, 27) so eingerichtet sind, dass sie ein geometrisches Muster ausbilden, das sich auf einer gleichen Linie (A) wiederholt.

9. Luftblasenfolie (1) nach einem der Ansprüche 7 und 8, wobei sich mindestens eine Luftblase (22, 26) in einem gleichen geometrischen Muster zweimal wiederholt, wobei die gleichen zwei Luftblasen (22, 26) relativ zu einem Bezugselement symmetrisch angeordnet sind, um ein geometrisches Muster auszubilden, das eine strukturelle Symmetrie ausbildet.

10. Luftblasenfolie (1) nach Anspruch 9, wobei die geometrischen Muster auf zwei angrenzenden Linien (Aa) versetzt angeordnet sind, wobei ein geometrisches Muster seitlich zu sich selbst komplementär ist.

11. Luftblasenfolie (1) nach Anspruch 7, **dadurch gekennzeichnet, dass** sie eine vierte Luftblase (28) aufweist, die eine kreisförmige Form mit einem kleineren Durchmesser als die erste kreisförmige Luftblase (22) besitzt, wobei die dritte Luftblase einen länglichen Querschnitt besitzt, sie definiert eine längliche Luftblase (27).

12. Luftblasenfolie (1) nach Anspruch 11, wobei mindestens zwei unterschiedliche Luftblasen (22, 28, 23, 26) so eingerichtet sind, dass sie mindestens ein aktinomorphes geometrisches Muster ausbilden, das sich auf einer gleichen Linie (A) wiederholt, wobei jedes geometrische aktinomorphe Muster mit einer länglichen Luftblase (27) eingefügt ist.

13. Luftblasenfolie (1) nach Anspruch 12, wobei ein aktinomorphes geometrisches Muster aus einer kreisförmigen Luftblase (22, 28), die in der Mitte des geometrischen Musters angeordnet ist, und aus vier polygonalen Luftblasen (23, 26) besteht, die paarweise durch radiale Symmetrie angeordnet sind.

14. Verwendung einer Luftblasenfolie (1), wie nach einem der Ansprüche 1 bis 13 definiert, für die Isolierung eines Schwimmbeckens oder eines Beckens.

15. Verwendung einer Luftblasenfolie (1), wie nach einem der Ansprüche 1 bis 13 definiert, für eine Logistikisolierung.

16. Prägezylinder zum Herstellen einer Luftblasenfolie (1) nach einem der Ansprüche 1 bis 13, wobei der Prägezylinder eine Prägewand umfasst, die eine Folge von Vertiefungslinien aufweist, wobei die Linien angrenzend und parallel zueinander sind, wobei sich jede Linie von einem ersten Ende des Zylinders zu einem zweiten Ende des Zylinders erstreckt, **dadurch gekennzeichnet, dass** er mindestens zwei Luftblasenvertiefungen (2, 22, 23, 24, 25, 26, 27, 28) umfasst, jede Vertiefung umfassend Merkmale, die angepasst sind, um eine spezifische Luftblase (2, 22, 22, 23, 24, 25, 26, 27, 28) zu prägen, wobei die mindestens zwei Vertiefungen einerseits von verschiedenen und komplementären Geometrien sind und andererseits die mindestens zwei Vertiefungen in Abhängigkeit von ihrer komplementären Geometrie auf einer gleichen Linie und/oder auf zwei angrenzenden Linien der Prägewand abwechselnd angeordnet sind.

## Claims

1. Bubble wrap (1) defined by peripheral edges (10), the bubble wrap (1) comprising a first planar surface (11) and a second cellular surface (12) which comprises a network of sealed bubbles (2) containing trapped air and comprising at least two types of bubbles (2, 22, 23, 24, 25, 26, 27, 28) having separate geometries, the bubbles (2) being separated from one another by a gap (3), the network of bubbles (2) consisting of a series of lines (A) of bubbles (2) which are parallel and adjacent to one another, each line (A) extending, within the network of bubbles (2), from a first peripheral edge (10) to a second peripheral edge (10), the shapes of the two types of bubbles (2, 22, 23, 24, 25, 26, 21, 28) being
complementary, the at least two types of bubbles (2, 22, 23, 24, 25, 26, 27, 28) being arranged alternately according to their complementary shape on the same line (A) and/or on two lines (A) adjacent to the network of bubbles (2) and each bubble (2) comprising an upper portion (20) which is planar and extending in the same plane which is parallel to the planar surface (11) of the bubble wrap (1).

2. Bubble wrap (1) according to claim 1, each bubble (2, 22, 23, 24, 25, 26, 27, 28) comprising at least one peripheral wall (21) which extends between the upper portion (20) and the planar surface (11), convexly along an axis (X-X) which is perpendicular to the planar surface (11).

3. Bubble wrap (1) according to either claim 1 or claim 2, **characterized in that** it comprises a first circular bubble (22) having a determined diameter, and a second complementary polygonal bubble (23) having at least one peripheral wall (21) which is radially complementary to the diameter of the circular bubble (22).

4. Bubble wrap (1) according to claim 3, wherein at least one peripheral wall (21) of the polygonal bubble (23) extends concavely with respect to an axis (Y-Y) which is parallel to the planar surface (11) of the bubble wrap (1).

5. Bubble wrap (1) according to claims 3 and 4, each circular bubble (22) being aligned with a peripheral wall (21) of at least two polygonal bubbles (23), these bubbles (22, 23) being arranged on the same line (A) by alternating between a circular bubble (22) and a polygonal bubble (23).

6. Bubble wrap (1) according to claim 5, wherein the arrangement of the bubbles (22, 23) on two adjacent lines (A) is offset so that a circular bubble (22) of a first line (A) is aligned with the peripheral wall (21) of at least one polygonal bubble (23) arranged on a second line (A) adjacent to the first line (A).

7. Bubble wrap (1) according to claim 4, **characterized in that** it comprises a third bubble (24, 25, 26, 27) having a shape that is separate from the circular bubble (22) and from the polygonal bubble (23).

8. Bubble wrap (1) according to claim 7, wherein the three bubbles (22, 24, 25, 26, 27) are arranged so as to form a geometric pattern which is repeated on the same line (A).

9. Bubble wrap (1) according to either claim 7 or claim 8, at least one bubble (22, 26) being repeated twice in the same geometric pattern, the same two bubbles (22, 26) being arranged symmetrically with respect to a reference element in order to form a geometric pattern having a structural symmetry.

10. Bubble wrap (1) according to claim 9, wherein the geometric patterns are arranged such as to be offset on two adjacent lines (Aa), a geometric pattern being complementary to itself laterally.

11. Bubble wrap (1) according to claim 7, **characterized in that** it comprises a fourth bubble (28) which has a circular shape having a diameter that is smaller than the first circular bubble (22), the third bubble having an oblong portion and defining an oblong bubble (27).

12. Bubble wrap (1) according to claim 11, wherein at least two different bubbles (22, 28, 23, 26) are arranged so as to form at least one actinomorphic geometric pattern which is repeated on the same line (A), each actinomorphic geometric pattern being inserted with an oblong bubble (27).

13. Bubble wrap (1) according to claim 12, an actinomorphic geometric pattern consisting of a circular bubble (22, 28) arranged in the center of the geometric pattern and four polygonal bubbles (23, 26) arranged in pairs by radial symmetry.

14. Use of a bubble wrap (1), defined according to any of claims 1 to 13 for insulating swimming pools.

15. Use of a bubble wrap (1), defined according to any of claims 1 to 13, for logistical insulation.

16. Embossing cylinder for producing a bubble wrap (1) according to any of claims 1 to 13, the embossing cylinder comprising an embossing wall having a series of impression lines, the lines being adjacent and parallel to one another, each line extending from a first end of the cylinder to a second end of the cylinder, **characterized in that** it comprises at least two bubble impressions (2, 22, 23, 24, 25, 26, 27, 28), each impression comprising features which are suitable for embossing a specific bubble (2, 22, 22, 23, 24, 25, 26, 27, 28), the at least two impressions having separate and complementary shapes, and the at least two impressions being arranged alternately according to their complementary shape on the same line and/or on two adjacent lines of the embossing wall.
